# EUROPÄISCHE PATENTSCHRIFT

(11) **EP 4 052 963 B1**
(45) Veröffentlichungstag und Bekanntmachung des Hinweises auf die Patenterteilung: **10.01.2024**
(21) Anmeldenummer: 21209496.5
(22) Anmeldetag: 22.11.2021
(51) Int. Cl.: B60Q 1/04

(54) **TEILESATZ FÜR EIN FRONTLICHTMODUL**
SET OF PARTS FOR A FRONT LIGHT MODULE
ENSEMBLE DE PIÈCES POUR UN MODULE D'ÉCLAIRAGE AVANT

(30) Priorität: 05.03.2021 DE 102021105426
(43) Veröffentlichungstag der Anmeldung: 07.09.2022
(73) Patentinhaber: CLAAS Tractor S.A.S., 78141 Vélizy-Villacoublay Cedex (FR)
(72) Erfinder: Desbois, Frédéric, 78140 Vélizy Villacoublay (FR); Matthies, Markus, 33609 Bielefeld (DE)
(74) Vertreter: CLAAS Gruppe

(56) Entgegenhaltungen:
- DE-A1-102015 210 330
- JP-A- 2005 119 430
- JP-A- 2005 343 462
- JP-B2- 4 981 775
- JP-U- H04 122 238
- US-A1- 2019 384 321

## Beschreibung

Die vorliegende Erfindung betrifft einen Teilesatz für die Herstellung eines Frontlichtmoduls für ein Fahrzeug, insbesondere ein landwirtschaftliches Fahrzeug wie etwa einen Traktor, sowie einen landwirtschaftliches Fahrzeug mit einem solchen Frontlichtmodul. JP 2005-119430A zeigt ein Frontlichtmodul für einen Traktor.

Wie in EP 3 106 347 A1 gezeigt, sind rechte und linke Leuchtenmodule herkömmlicherweise an vorderen Ecken einer Motorhaube montiert, die einen Teil eines in etwa quaderförmigen Motorgehäuses bildet.

Aus EP 0 757 945 A2 ist ein Traktor bekannt, bei dem ein Entriegelungsmechanismus für die Motorhaube einen Zwischenraum zwischen einem rechten und einem linken Leuchtenmodul ausfüllt und mit Front- und Seitenscheinwerfern der Leuchtenmodule zu einer vormontierten Einheit verbunden ist.

Traktoren werden in verschiedenen Modellen mit entsprechend ihren Motorleistungen unterschiedlichen Abmessungen des Motorgehäuses gefertigt. Da die jeweils für ein Modell spezifischen Bauteile nur in relativ kleiner Serie gefertigt werden, ist ihre Fertigung aufwendig und kostspielig. Es besteht daher ein Bedürfnis, den mit der Fertigung unterschiedlicher Modelle verbundenen Aufwand zu minimieren.

Eine Aufgabe der vorliegenden Erfindung ist, einen Teilesatz eines Frontlichtmoduls anzugeben, der zu diesem Ziel beiträgt.

Die Aufgabe wird gelöst, indem bei einem Teilesatz eines Frontlichtmoduls eines landwirtschaftlichen Fahrzeugs, insbesondere eines Traktors, mit einem linken Leuchtenmodul, einem rechten Leuchtenmodul und einem Zwischenmodul, das einen komplementär zum linken Leuchtenmodul geformten linken Anschlussbereich und einen komplementär zum rechten Leuchtenmodul geformten rechten Anschlussbereich zum Platzieren angrenzend an das linke und das rechte Leuchtenmodul aufweist, das Zwischenmodul austauschbar ist und aus einem Sortiment von Zwischenmodulen mit jeweils unterschieldichen Abständen (d, d') zwischen den Anschlussbereichen (25, 26) ausgewählt wird. So ist es möglich, für verschiedene Fahrzeugmodelle identische Leuchtenmodule zu verwenden, unabhängig von dem Abstand, den diese nach ihrer Montage im Fahrzeug haben werden, was zu einem einheitlichen Erscheinungsbild der Fahrzeuge und einer verbesserten Wiedererkennungswert für den Anwender oder allgemein Betrachter der Fahrzeuge beiträgt. Eine zwischen den Leuchtenmodulen verbleibende Lücke von je nach Modell unterschiedlicher Breite kann durch Auswählen des eines Zwischenmoduls in der jeweils passenden Breite, d.h. mit jeweils passendem Abstand zwischen seinen im eingebauten Zustand von den Leuchtenmodulen typischerweise jeweils nur durch einen schmalen Spalt getrennten Anschlussbereichen, ausgefüllt werden; Zwischenmodule können aufgrund ihrer kleinen Abmessungen preiswert in Varianten mit jeweils unterschiedlichen Breiten bereitgestellt werden.

Die je nach Modell unterschiedlichen Breiten des Zwischenmoduls spiegeln die unterschiedlichen Breiten der Motorhauben der verschiedenen Fahrzeugmodelle wieder und unterscheiden sich daher um deutlich mehr als die Fertigungstoleranz, vorzugsweise um einen Zentimeter oder mehr.

Das Zwischenmodul ist prädestiniert, um daran eine Marke oder ein Logo des Herstellers anzubringen.

Jedes einzelne Leuchtenmodul ist vorzugsweise multifunktional, d.h. es kann wenigstens eine Tagfahrleuchte und eine Arbeitsleuchte aufweisen, und/oder es können eine Arbeitsleuchte für den Nahbereich und eine Arbeitsleuchte für den Fernbereich vorgesehen sein.

Im Zwischenmodul kann eine Kamera vorgesehen sein, um nach dem Einbau einen Raum vor dem Fahrzeug, insbesondere einen Bereich, der aus Sicht des Fahrers durch die Motorhaube verdeckt ist, zu überwachen.

Die Kamera kann in einer randoffenen Aussparung des Zwischenmoduls des Zwischenmoduls aufgenommen sein. Dies ermöglicht eine einfache Montage der Kamera durch Einstrecken und ihre anschließende formschlüssige Sicherung im Zusammenwirken mit dem Rand einer das Leuchtenmodul aufnehmenden Karosserieöffnung.

Gegenstand der Erfindung ist ferner ein landwirtschaftliches Fahrzeug, insbesondere ein Traktor, mit einem Frontlichtmodul, das aus einem Teilesatz wie oben beschrieben gebildet ist.

Das Frontlichtmodul des Fahrzeugs kann insbesondere durch Auswählen eines der Zwischenmodule eines Teilesatzes gemäß der oben beschriebenen ersten Alternative und Befestigen des ausgewählten Zwischenmoduls und der Leuchtenmodule in einer Karosserieöffnung des Fahrzeugs erhalten sein.

Die Leuchtenmodule und das Zwischenmodul sind vorzugsweise in einer einzigen Karosserieöffnung des Fahrzeugs, insbesondere einer Öffnung einer Motorhaube des Fahrzeugs, montiert.

Vorzugsweise sind das Zwischenmodul und die Leuchtenmodule jeweils für sich an Rändern der Karosserieöffnung befestigt. So können eventuelle Fertigungstoleranzen bei den Abmessungen der Karosserieöffnung über eine variable Spaltbreite zwischen den Anschlussbereichen des Zwischenmoduls und ihnen gegenüberliegenden Bereichen der Leuchtenmodule ausgeglichen werden.

Wenn die Leuchtenmodule jeweils Arbeitsleuchten für den Nahbereich und für den Fernbereich umfassen, ist vorzugsweise in jedem Leuchtenmodul die Arbeitsleuchte für den Nahbereich bezogen auf eine Längsrichtung des Fahrzeugs hinter der Arbeitsleuchte für den Fernbereich und bezogen auf eine Querrichtung weiter von einer Mittenebene des Fahrzeugs entfernt als die Arbeitsleuchte für den Fernbereich, um auch Bereiche seitlich des Fahrzeugs gut ausleuchten zu können.

Als Erfindungsgegenstand kommt auch ein für die Fahrzeugmontage vorgehaltener Teilebestand in Betracht: während die Leuchtenmodule eines solchen Teilebestandes untereinander sämtlich identisch oder spiegelblidlich sind, sind darin verschiedene Varianten des Zwischenmoduls enthalten, unter denen bei der Montage eines spezifischen Fahrzeugs diejenige mit der jeweils passenden Breite ausgewählt wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: Vorderansichten von Motorhauben zweier Traktoren;
- Fig. 2 bis 4: Ansichten eines Frontlichtmoduls zum Einbau an einer der Motorhauben

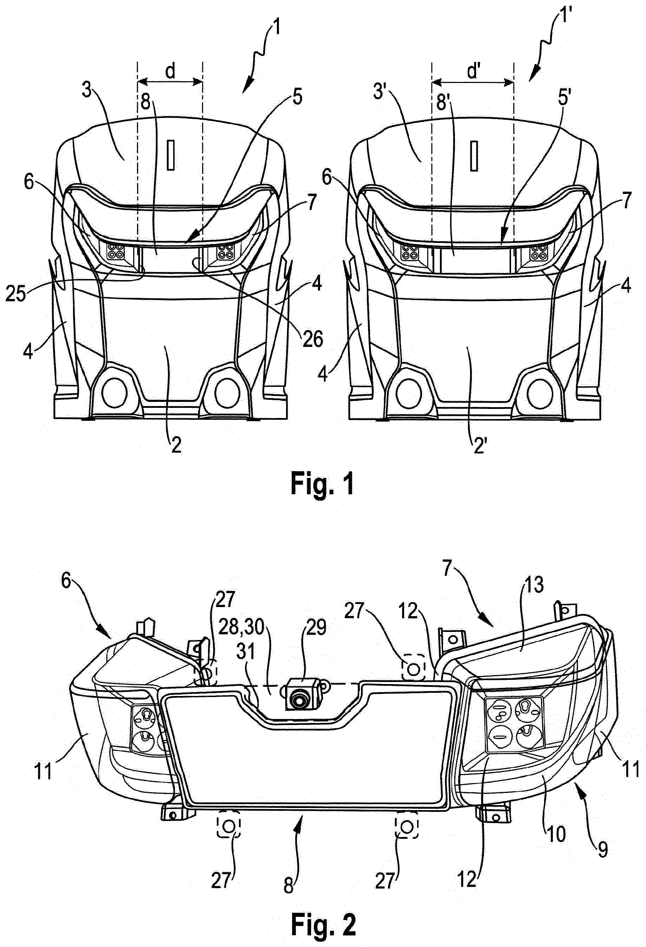

Fig. 1 zeigt in ihrer linken Hälfte eine Motorhaube 1 eines ersten Modells eines Traktors in einer Ansicht von vorn. Die Motorhaube 1 umfasst eine in etwa quer zur Fahrtrichtung orientierte Stirnwand 2, eine in etwa in Fahrtrichtung orientierte, typischerweise nach vorn leicht abschüssige Oberseite 3 und Seitenwände 4, die, da sie im wesentlichen in Blickrichtung verlaufen, nur zu einem kleinen Teil sichtbar sind. Die Stirnwand 2 und die Oberseite 3 sind voneinander durch eine Öffnung 5 getrennt, die sich über die gesamte Breite von Stirnwand 2 und Oberseite 3 bis auf die Seitenwände 4 erstreckt.

An linken und rechten Enden der Öffnung 5 ist jeweils ein Leuchtenmodul 6, 7 montiert.

Eine Lücke zwischen den Leuchtenmodulen 6, 7 ist durch ein Zwischenmodul 8 mit einer Breite d ausgefüllt.

Eine Motorhaube 1' eines zweiten Traktormodells ist in der rechten Hälfte von Fig. 1 gezeigt. Stirnwand 2' und Oberseite 3' - und infolgedessen auch die Öffnung 5' - sind um mehrere Zentimeter breiter als bei der Motorhaube der Fig. 1. Beide Motorhauben 1, 1' können aus mehreren Elementen zusammengefügt sein. Wenn z.B. die Stirnwand und die Oberseite als von den Seitenwänden getrennte Komponenten gefertigt sind, können die Seitenwände 4 beider Motorhauben 1, 1' baugleich sein.

Auch die Leuchtenmodule 6, 7 der Motorhaube 1' sind mit denen der Motorhaube 1 baugleich. Um die im Vergleich zur Motorhaube 1 längere Öffnung 5' auszufüllen, ist ein zweites Zwischenmodul 8' mit größerer Breite d` vorgesehen.

Fig. 2 bis 4 zeigen die Leuchtenmodule 6, 7 und das Zwischenmodul 8 in verschiedenen Ansichten. Das in der Vorderansicht linke Leuchtenmodul 6 und das rechte Leuchtenmodul 7 sind zueinander spiegelbildlich, so dass es genügt, eines von beiden genauer zu beschreiben.

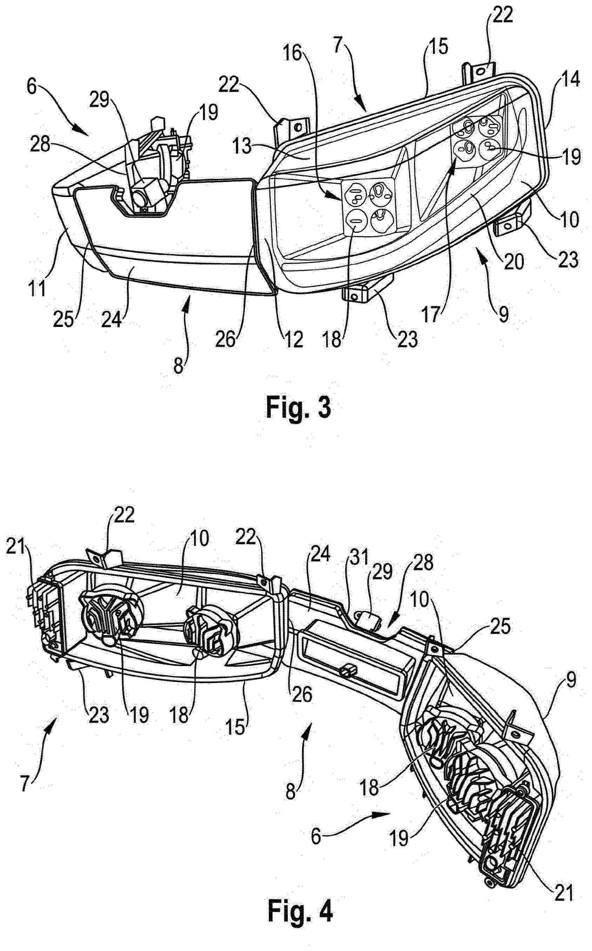

Ein Gehäuse des Leuchtenmoduls 7 ist in an sich bekannter Weise durch einen schalenförmigen Schirm 9 und eine in Fig. 3 und 4 durch den durchsichtigen Schirm 9 hindurch sichtbare Grundplatte 10 gebildet. Der Schirm 9 hat eine schwach gewölbte Sichtfläche 11, die im montierten Zustand in der Öffnung 5 frei liegt und bündig an die Stirnwand 2, die Oberseite 3 und die Seitenwand 4 anschließt. Entlang der Ränder der Sichtfläche 11 schließen sich in Fahrtrichtung erstreckende Wände 12, 13 an. Die Abmessung in Fahrtrichtung dieser Wände 12, 13 ist maximal in einem dem Zwischenmodul 8 zugewandten Teil des Schirms 9; an einem äußeren, vom Zwischenmodul abgewandten Rand 14 desselben kann sie nahe Null sein. Entlang der von der Sichtfläche 11 abgewandten hinteren Ränder der Wände 12, 13 ist ein umlaufender Steg 15 gebildet, an dem die Grundplatte 10 befestigt ist. Der Steg 15 kann auch als Anschlag zum Festlegen der Einbauposition des Leuchtenmoduls in der Fahrtrichtung an der Motorhaube 1 dienen.

An der Grundplatte sind zwei Sätze von Öffnungen gebildet, die mit darin montierten , in den Figuren nicht gezeigten Leuchtmitteln, z.B. Weißlicht-LEDs oder Halogenglühbirnen, eine Arbeitsleuchte 16 für den Fernbereich bzw. 17 für den Nahbereich bilden. Hinter den Öffnungen angeordnete Fassungen 18, 19 für die Leuchtmittel sind insbesondere in Fig. 3 und 4 zu erkennen. Die Arbeitsleuchte für den Fernbereich 16 ist zum Ausleuchten eines in Fahrtrichtung langgestreckten Streifens am Boden vor dem Fahrzeug bis in eine Entfernung von einigen 10 Metern vorgesehen. Die Arbeitsleuchte für den Nahbereich 17, dient zum Ausleuchten einer Bodenfläche, die sich über wenige Meter vor, aber auch seitwärts vom Traktor erstreckt. Um insbesondere entlang der Seiten des Traktors möglichst weit nach hinten leuchten zu können, sind die Arbeitsleuchten für den Nahbereich 17 in beiden Leuchtenmodulen 6, 7 weiter von der Fahrzeugmitte entfernt und hinter den Arbeitsleuchten 16 für den Fernbereich angeordnet.

Eine Tagfahrleuchte 20 ist hier durch einen diffus emittierenden Lichtleiter gebildet, der sich im Bogen unter den Arbeitsleuchten 16, 17 her erstreckt und von einer LED in einer Fassung 21 gespeist ist. Wie in Fig. 4 zu erkennen, sind die Fassungen 18, 19, 21 mit Kühlrippen versehen, um die Abwärme ihrer Leuchtmittel zu verteilen.

Befestigungslaschen 22, 23 zum Verschrauben an der Stirnwand 2 bzw. der Oberseite 3 stehen über den umlaufenden Steg 15 nach oben und unten über.

Das Zwischenmodul 8 umfasst eine in etwa rechteckige Grundplatte 24, deren seitliche Ränder Anschlussbereiche 25, 26 für die Leuchtenmodule 6, 7 bilden. An einer Außenseite der Grundplatte 24 kann eine (in den Figuren nicht gezeigte) Herstellermarke angebracht sein. Um deren Sichtbarkeit zu erhöhen, kann in einer Aussparung der Grundplatte 24 eine Mattscheibe angebracht sein, durch die hindurch die Herstellermarke von hinten beleuchtbar ist. Ein Gehäuse an der Rückseite der Grundplatte 24, das zu diesem Zweck ein Leuchtmittel aufnimmt, ist in Fig. 4 zu erkennen. Die seitlichen Ränder der Grundplatte 24 sind komplementär zu den Leuchtenmodulen 6, 7 geformt, indem sie deren Wänden 12 unter Ausbildung eines Spalts von konstanter Breite gegenüberliegen, und indem die Außenseite der Grundplatte 24 an den seitlichen Rändern die Sichtfläche 11 des Schirme 9 bündig verlängert. Verschiedene Modelle des Zwischenmoduls 8 unterscheiden sich in der Breite d, d' ihrer Grundplatte 24, nicht aber in Verlauf und Gestalt der seitlichen Ränder bzw. Anschlussbereiche 25, 26.

An oberen und unteren Rändern der Grundplatte 24 sind überstehende Befestigungslaschen 27 geformt, die wie die Befestigungslaschen 22, 23 der Leuchtenmodule 6, 7 zum Verschrauben an der Stirnwand 2 bzw. der Oberseite 3 dienen. Eine direkte Befestigung der Leuchtenmodule 6, 7 und des Zwischenmoduls 8 aneinander ist nicht vorgesehen, die Spalte zwischen ihnen können offenbleiben.

Eine Aussparung 28 an einem oberen Rand der Grundplatte 24 ist vorgesehen, um eine elektronische Kamera 29 aufzunehmen. Die Kamera 29 ist in Fig. 2, 3 und 4 jeweils frei schwebend dargestellt; zu ihrer Befestigung kann eine Leiterplatte 30 (s. Fig. 2) dienen, die die Kamera 29 trägt und an einer Rückseite der Grundplatte 24 befestigt ist. Ein nicht dargestellter durchsichtiger Schirm zum Schutz der Kamera kann befestigt sein, indem eine Nut des Schirms auf eine am Rand der Aussparung 28 geformte Feder 31 aufgesteckt wird. Nach dem Einbau in die Öffnung 5 ist der Schirm zwischen der Grundplatte 24 und dem Rand der Oberseite 3 unverlierbar gehalten. Alternativ kann die Kamera 29 mit dem Schirm zu einer auf die Feder 31 aufgesteckten Baueinheit verbunden sein.

Wenn die Kamera vom Kunden nicht gewünscht wird, kann die Aussparung 28 auch lediglich durch eine Blende verschlossen sein.

### Bezugszeichen

- 1: Motorhaube
- 2: Stirnwand
- 3: Oberseite
- 4: Seitenwand
- 5: Öffnung
- 6: Leuchtenmodul
- 7: Leuchtenmodul
- 8: Zwischenmodul
- 9: Schirm
- 10: Grundplatte
- 11: Sichtfläche
- 12: Wand
- 13: Wand
- 14: Rand
- 15: Steg
- 16: Arbeitsleuchte für den Fernbereich
- 17: Arbeitsleuchte für den Nahbereich
- 18: Fassung
- 19: Fassung
- 20: Tagfahrleuchte
- 21: Fassung
- 22: Befestigungslasche
- 23: Befestigungslasche
- 24: Grundplatte
- 25: Anschlussbereich
- 26: Anschlussbereich
- 27: Befestigungslasche
- 28: Aussparung
- 29: Kamera
- 30: Leiterplatte
- 31: Feder

## Patentansprüche

1. Teilesatz eines Frontlichtmoduls eines landwirtschaftlichen Fahrzeugs, insbesondere eines Traktors, mit einem linken Leuchtenmodul (6), einem rechten Leuchtenmodul (7) und einem Zwischenmodul (8, 8`), das einen komplementär zum linken Leuchtenmodul (6) geformten linken Anschlussbereich (25) und einen komplementär zum rechten Leuchtenmodul (7) geformten rechten Anschlussbereich (26) zum Platzieren angrenzend an das linke und das rechte Leuchtenmodul (6, 7) aufweist, **dadurch gekennzeichnet, dass** das Zwischenmodul (8', 8) austauschbar ist und aus einem Sortiment von Zwischenmodulen mit jeweils unterschiedlichen Abständen (d, d`) zwischen den Anschlussbereichen (25, 26) ausgewählt wird.

2. Teilesatz nach Anspruch 1, **dadurch gekennzeichnet, dass** jedes Leuchtenmodul (6, 7) wenigstens eine Tagfahrleuchte (20) und eine Arbeitsleuchte (16, 17) aufweist.

3. Teilesatz nach Anspruch 1 oder 2, **dadurch gekennzeichnet, dass** jedes Leuchtenmodul (6, 7) wenigstens eine Arbeitsleuchte für den Nahbereich (17) und eine Arbeitsleuchte für den Fernbereich (16) aufweist.

4. Teilesatz nach einem der vorhergehenden Ansprüche, **dadurch gekennzeichnet, dass** das Zwischenmodul (8, 8') eine Kamera (29) aufweist.

5. Teilesatz nach Anspruch 4, **dadurch gekennzeichnet, dass** die Kamera (29) in einer randoffenen Aussparung (28) des Zwischenmoduls (8, 8') aufgenommen ist.

6. Landwirtschaftliches Fahrzeug mit einem Frontlichtmodul, das aus einem Teilesatz nach einem der vorhergehenden Ansprüche gebildet ist, **dadurch gekennzeichnet, dass** das Frontlichtmodul durch Auswählen des Zwischenmoduls (8, 8') aus einem Sortiment von Zwischenmodulen mit jeweils unterschiedlichen Abständen (d, d`) zwischen den Anschlussbereichen (25, 26) und Befestigen des ausgewählten Zwischenmoduls (8, 8') und der Leuchtenmodule (6, 7) in einer Karosserieöffnung (5) des Fahrzeugs erhalten ist.

7. Landwirtschaftliches Fahrzeug nach Anspruch 6, **dadurch gekennzeichnet, dass** die Leuchtenmodule (6, 7) und das Zwischenmodul (8, 8') in einer einzigen Karosserieöffnung des Fahrzeugs, insbesondere einer Öffnung (5, 5') einer Motorhaube (1, 1') des Fahrzeugs, montiert sind.

8. Landwirtschaftliches Fahrzeug nach Anspruch 7, **dadurch gekennzeichnet, dass** das Zwischenmodul (8, 8') und die Leuchtenmodule (6, 7) jeweils für sich an Rändern der Karosserieöffnung (5, 5') befestigt sind.

9. Landwirtschaftliches Fahrzeug nach einem der Ansprüche 6 bis 8, **dadurch gekennzeichnet, dass** das Frontlichtmodul (6, 7) aus einem Teilesatz nach Anspruch 3 gebildet ist und dass die Arbeitsleuchte für den Nahbereich (17) bezogen auf eine Längsrichtung des Fahrzeugs hinter der Arbeitsleuchte für den Fernbereich (16) und bezogen auf eine Querrichtung weiter von einer Mittenebene des Fahrzeugs entfernt ist als die Arbeitsleuchte für den Fernbereich (16).

## Claims

1. Set of parts of a front light module of an agricultural vehicle, in particular a tractor, comprising a left light module (6), a right light module (7) and an intermediate module (8, 8') comprising a left connection area (25) shaped complementarily to the left light module (6) and a right connection area (26) shaped complementarily to the right light module (7) for placement adjacent to the left and right light modules (6, 7), **characterised in that** the intermediate module (8', 8) is interchangeable and is selected from an assortment of intermediate modules having respective different distances (d, d') between the connection regions (25, 26).

2. Set of parts according to claim 1, **characterised in that** each light module (6, 7) comprises at least one daytime running light (20) and one working light (16, 17).

3. Set of parts according to claim 1 or 2, **characterised in that** each light module (6, 7) comprises at least one working light for the near range (17) and one working light for the distance range (16).

4. Set of parts according to one of the preceding claims, **characterised in that** the intermediate module (8, 8') comprises a camera (29).

5. Set of parts according to claim 4, **characterised in that** the camera (29) is accommodated in an open-edge recess (28) of the intermediate module (8, 8').

6. Agricultural vehicle comprising a front light module formed by a set of parts according to one of the preceding claims, **characterised in that** the front light module is obtained by selecting the intermediate module (8, 8') from an assortment of intermediate modules having respective different distances (d, d') between the connection areas (25, 26) and fixing the selected intermediate module (8, 8') and the light modules (6, 7) in a body opening (5) of the vehicle.

7. Agricultural vehicle according to claim 6, **characterised in that** the light modules (6, 7) and the intermediate module (8, 8') are mounted in a single body opening of the vehicle, in particular an opening (5, 5') of a bonnet (1, 1') of the vehicle.

8. Agricultural vehicle according to claim 7, **characterised in that** the intermediate module (8, 8') and the light modules (6, 7) are each fixed separately to edges of the body opening (5, 5').

9. Agricultural vehicle according to any one of claims 6 to 8, **characterised in that** the front light module (6, 7) is formed from a set of parts according to claim 3 and **in that** the working light for the near range (17) is located behind the working light for the distance range (16) with respect to a longitudinal direction of the vehicle and further away from a centre plane of the vehicle with respect to a transverse direction than the working light for the distance range (16).

## Revendications

1. Jeu de pièces d'un module lumineux avant d'un véhicule agricole, en particulier d'un tracteur, comprenant un module de feu gauche (6), un module de feu droit (7) et d'un module intermédiaire (8, 8') qui comporte une zone de raccordement gauche (25) formée de manière complémentaire au module de feu gauche (6) et une zone de raccordement droite (26) formée de manière complémentaire au module de feu droit (7), à placer de manière adjacente aux modules de feu gauche et droit (6, 7), **caractérisé en ce que** le module intermédiaire (8, 8') est échangeable et est sélectionné à partir d'un assortiment de modules intermédiaires avec des écartements (d, d') respectivement différents entre les zones de raccordement (25, 26) .

2. Jeu de pièces selon la revendication 1, **caractérisé en ce que** chaque module de feu (6, 7) comporte au moins un feu de route diurne (20) et un feu de travail (16, 17).

3. Jeu de pièces selon la revendication 1 ou 2, **caractérisé en ce que** chaque module de feu (6, 7) comporte au moins un feu de travail pour la zone proche (17) et un feu de travail pour la zone lointaine (16).

4. Jeu de pièces selon une des revendications précédentes, **caractérisé en ce que** le module intermédiaire (8, 8') comporte une caméra (29).

5. Jeu de pièces selon la revendication 4, **caractérisé en ce que** la caméra (29) est logée dans un évidement à bord ouvert (28) du module intermédiaire (8, 8').

6. Véhicule agricole comprenant un module lumineux avant qui est formé à partir d'un jeu de pièces selon une des revendications précédentes, **caractérisé en ce que** le module lumineux avant est obtenu par sélection d'un module intermédiaire (8, 8') à partir d'un assortiment de modules intermédiaires avec des écartements (d, d') respectivement différents entre les zones de raccordement (25, 26) et par fixation du module intermédiaire (8, 8') sélectionné et des modules de feu (6, 7) dans une ouverture de carrosserie (5) du véhicule.

7. Véhicule agricole selon la revendication 6, **caractérisé en ce que** les modules de feu (6, 7) et le module intermédiaire (8, 8') sont montés dans une ouverture de carrosserie unique du véhicule, en particulier une ouverture (5, 5') d'un capot-moteur (1, 1') du véhicule.

8. Véhicule agricole selon la revendication 7, **caractérisé en ce que** le module intermédiaire (8, 8') et les modules de feu (6, 7) sont fixés chacun pour soi à des bords de l'ouverture de carrosserie (5, 5').

9. Véhicule agricole selon une des revendications 6 à 8, **caractérisé en ce que** le module lumineux avant (6, 7) est formé à partir d'un jeu de pièces selon la revendication 3, et **en ce que** le feu de travail pour la zone proche (17) se trouve, par rapport à une direction longitudinale du véhicule, derrière le feu de travail pour la zone lointaine (16) et est plus éloigné, par rapport à une direction transversale, d'un plan médian du véhicule que le feu de travail pour la zone lointaine (16).
